# FASCICULE DE BREVET EUROPEEN

(11) **EP 2 392 985 B1**
(45) Date de publication et mention de la délivrance du brevet: **24.01.2018**
(21) Numéro de dépôt: 11167908.0
(22) Date de dépôt: 27.05.2011
(51) Int. Cl.: G05G 1/36, G06F 3/033, G05G 1/60

(54) **Pédalier pour jeu vidéo ou simulation de conduite**
Pedal für Videospiel oder für Fahrsimulation
Pedal assembly for video game or driving simulator

(30) Priorité: 03.06.2010 FR 1054375; 27.10.2010 FR 1058863
(43) Date de publication de la demande: 07.12.2011
(73) Titulaire: Guillemot Corporation, 35135 Chantepie (FR)
(72) Inventeur: Pennaneac'h, Patrick, 35220 CHATEAUBOURG (FR); Sauvage, David, 35310 MORDELLES (FR); Raulet, Gilles, 56000 VANNES (FR); Jaouen, Jean-Yves, 56350 SAINT JEAN LA POTERIE (FR)
(74) Mandataire: Le Guen-Maillet

(56) Documents cités:
- DE-A1- 10 336 343
- DE-A1- 10 336 344
- DE-A1-102005 044 477
- GB-A- 2 138 530
- JP-A- 2007 159 615
- US-A1- 2003 094 070

## Description

Le domaine de l'invention est celui des matériels et accessoires de loisirs interactifs pour micro-ordinateurs et consoles de jeux. Plus précisément, la présente invention concerne un pédalier pour jeu vidéo ou pour la simulation de conduite de véhicules, une partie comportant des moyens de fixation pour un tel pédalier, ainsi qu'un procédé de changement de position d'un tel pédalier.

Certains jeux vidéo mettent en oeuvre un véhicule simulé qui évolue dans un environnement simulé. Un pédalier pour jeu vidéo comporte au moins une pédale pouvant être utilisée avec un jeu vidéo, par exemple, pour simuler un contrôle de l'accélération, du freinage ou d'un embrayage d'un véhicule terrestre à moteur (notamment une voiture). Un pédalier peut également être utilisé en complément d'un joystick pour contrôler le déplacement d'un aéronef (notamment un avion ou un hélicoptère).

Un pédalier pour jeu vidéo comporte un châssis qui se positionne sur le sol et qui comporte plusieurs pédales.

Un exemple connu est divulgué dans document DE 10 2005 044 477 A1. Chaque pédale comporte un bras de levier qui est monté mobile en rotation sur le châssis et une tête de pédale qui est fixée à l'extrémité libre du bras de levier. Sur certains pédaliers, le bras de levier et la tête de pédale forment une seule pièce.

Chaque pédale comporte des moyens de détection qui permettent de détecter lorsque la pédale est actionnée. Les moyens de détection transmettent alors les informations relatives au déplacement de la pédale à une unité centrale, par exemple du type ordinateur ou du type console de jeu, pour interagir avec le jeu vidéo lui-même installé dans l'unité centrale.

On connaît un pédalier pour lequel l'axe de rotation des bras de levier est à l'extrémité inférieure du bras de levier.

On connaît un autre pédalier pour lequel l'axe de rotation est à l'extrémité supérieure du bras de levier. Les pédales sont alors suspendues.

Selon le jeu vidéo utilisé, il est préférable d'utiliser l'une ou l'autre position. Mais le joueur doit alors posséder les deux types de pédaliers ce qui est contraignant.

L'utilisateur du pédalier (joueur, stagiaire, etc.) désire se rapprocher le plus possible de la réalité. Il doit alors utiliser, pour contrôler les jeux vidéo, différents types de pédaliers, en fonction des applications et des besoins. Ainsi pour un jeu vidéo simulant la conduite d'un véhicule, l'utilisation d'un pédalier correspondant dans sa forme et dans son utilisation au type de véhicule piloté rend la simulation plus réaliste, par exemple, l'utilisation d'un pédalier ayant la forme et la position des pédales d'une voiture grand tourisme pour un jeu de course de voitures grand tourisme et l'utilisation d'un pédalier pour lequel l'axe de rotation des bras de levier est à l'extrémité inférieure du bras de levier pour un jeu de course de Formule 1.

Posséder les deux types de pédalier est coûteux et se pose le problème de leur rangement et donc un problème d'encombrement.

Un objet de la présente invention est de proposer un pédalier pour jeu vidéo qui ne présente pas les inconvénients de l'art antérieur et qui en particulier permette une simulation réaliste notamment de telle sorte que le mouvement des pédales corresponde au mouvement des pédales du véhicule simulé et cela quel que soit le véhicule simulé.

L'invention a également pour objectif, selon au moins un mode de réalisation, de fournir un pédalier pour jeu vidéo ou simulation de conduite qui soit sûr, simple à installer et facile à utiliser.

L'invention a également pour objectif, selon au moins un mode de réalisation, de fournir un pédalier pour jeu vidéo ou simulation de conduite adaptable à la morphologie de l'utilisateur.

L'invention a également pour objectif, selon au moins un mode de réalisation, de fournir un pédalier pour jeu vidéo ou simulation qui soit facile à ranger et à transporter.

A cet effet, est proposé un pédalier selon la revendication 1 pour jeu vidéo ou simulation de conduite de véhicule, ledit pédalier comportant:
- un châssis, et
- au moins une pédale montée mobile en rotation par rapport audit châssis, ladite ou chaque pédale présentant une zone d'appui pour au moins un pied,
ledit pédalier étant caractérisé en ce que ledit châssis est prévu pour prendre alternativement au moins deux positions stables sur le sol ou sur un support:
- une première position stable, dans laquelle, vue de la gauche du pédalier, ladite ou chaque pédale pivote dans le sens inverse de celui des aiguilles d'une montre sous les efforts produits par ledit au moins un pied pour actionner ladite pédale,
- une deuxième position stable, dans laquelle, vue de la gauche du pédalier, ladite ou chaque pédale pivote dans le sens des aiguilles d'une montre sous les efforts produits par ledit au moins un pied pour actionner ladite pédale,
- la zone d'appui de la ou chaque pédale étant, dans chaque position stable, disposée de manière à se positionner sensiblement au niveau du métatarse dudit au moins un pied.
Ledit châssis est constitué d'une première partie supportant ladite ou lesdites pédales et d'au moins une deuxième partie, la ou chaque deuxième partie étant fixée de manière amovible sur ladite première partie ou sur une autre desdites deuxièmes parties. Ledit châssis est constitué d'une première partie supportant ladite ou lesdites pédales et d'au moins une deuxième partie, la ou chaque deuxième partie étant montée mobile en rotation par rapport à ladite première partie ou par rapport à une autre desdites deuxièmes parties.

Avantageusement, il y a une seule première partie et une seule deuxième partie assemblées l'une à l'autre en forme de L et les zones d'appui des pédales sont disposées à l'intérieur des branches du L.

Avantageusement, la rotation est réalisée par une charnière entre ladite première partie et ladite deuxième partie ou chacune desdites deuxièmes parties.

Avantageusement, le pédalier comporte au moins une entretoise fixée de manière amovible entre les deux parties pour les maintenir en position l'une par rapport à l'autre. Chaque partie présente une face de positionnement, chacune étant prévue pour se positionner sur le sol ou sur un support et correspondant chacune à une position stable du pédalier.

Avantageusement, le pédalier comporte un sélecteur permettant de réassigner au moins l'une des pédales en fonction de la position du pédalier.

Avantageusement, le sélecteur est un détecteur de gravité.

Avantageusement, le pédalier comporte, pour ladite ou chaque pédale, un dispositif de réglage intermédiaire destiné à permettre le réglage angulaire de ladite pédale, ledit dispositif de réglage intermédiaire comportant une chape montée mobile en rotation sur le châssis, un axe d'ajustement mobile en rotation sur ladite chape et des moyens de verrouillage qui verrouillent la position de la pédale par rapport à la chape, lesdits moyens de verrouillage prenant la forme d'un plot escamotable porté par la pédale, et d'une série d'au moins deux trous réalisée dans la chape et destinée à recevoir ledit plot escamotable.

Avantageusement, ladite ou chaque pédale est constituée d'un bras de levier, d'une tête de pédale portant ladite zone d'appui, et un dispositif d'orientation intermédiaire fixé, d'une part, audit bras de levier, et, d'autre part, fixé à ladite tête de pédale, et destiné à orienter ladite tête de pédale par rapport audit bras de levier.

Avantageusement, le pédalier comporte pour la ou chaque pédale, une butée fixée de manière amovible audit châssis et comprenant une zone de butée sur laquelle ladite pédale vient en butée lorsqu'elle est actionnée par ledit au moins un pied ou lorsque ladite butée pré-contraint ladite pédale.

Avantageusement, ladite butée est réglable en position de manière à permettre un déplacement de ladite zone de butée le long de ladite pédale.

L'invention propose également une deuxième partie comportant des moyens de fixation à une première partie d'un pédalier selon une variante précédente.

L'invention propose également un procédé de changement de position d'un pédalier selon l'une des variantes précédentes, ledit procédé comprenant:
- une étape de pivotement dudit pédalier autour d'un axe sensiblement parallèle à l'axe de rotation de la ou chaque pédale de manière à passer d'une position stable à l'autre position stable, et
- une étape de réassignation de la fonction de la ou d'au moins une des pédales.

Avantageusement, le procédé de changement de position comprend en outre une étape de pivotement du pédalier autour d'un axe sensiblement orthogonal à la surface du sol ou du support du pédalier.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un pédalier pour jeu vidéo selon un premier mode de réalisation de l'invention dans une première position d'utilisation,
la Fig. 2 représente le pédalier de la Fig. 1 dans une deuxième position d'utilisation avec en outre un caillebotis et un repose-pied,
la Fig. 3 montre la fixation d'un système de retour élastique du pédalier,
la Fig. 4 montre un détail de la Fig. 3,
la Fig. 5 montre un dispositif d'orientation d'une tête de pédale,
la Fig. 6 montre le pédalier selon l'invention,
la Fig. 7 montre un détail du pédalier selon l'invention,
la Fig. 8 montre le pédalier selon l'invention vu de sa gauche,
la Fig. 9 représente un pédalier pour jeu vidéo selon un deuxième mode de réalisation de l'invention dans une première position d'utilisation,
la Fig. 10 représente le pédalier de la Fig. 9 dans une deuxième position d'utilisation,
la Fig. 11 montre une coupe par un plan vertical du pédalier de la Fig. 9, et
la Fig. 12 montre une coupe par un autre plan vertical du pédalier de la Fig. 10.

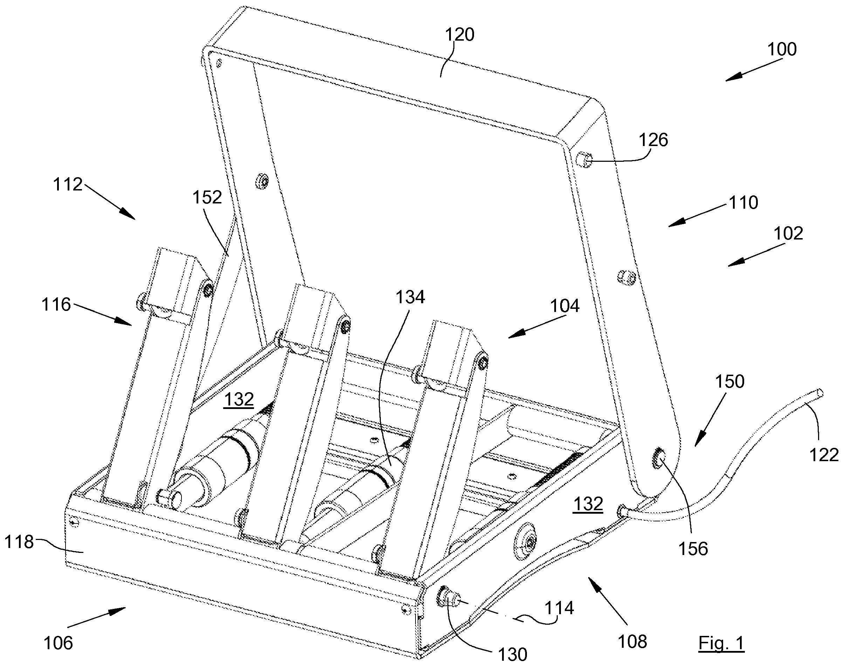

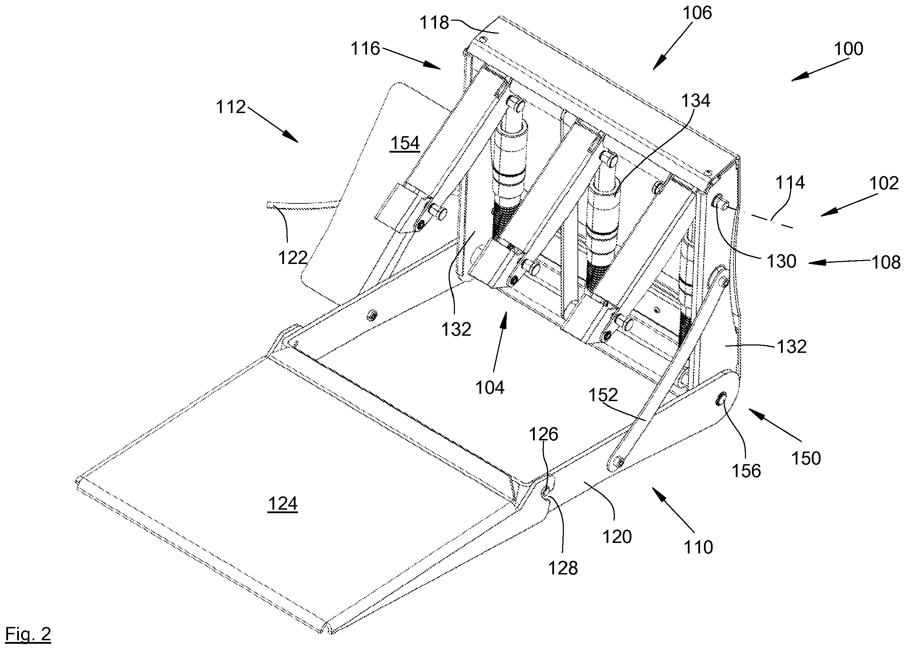

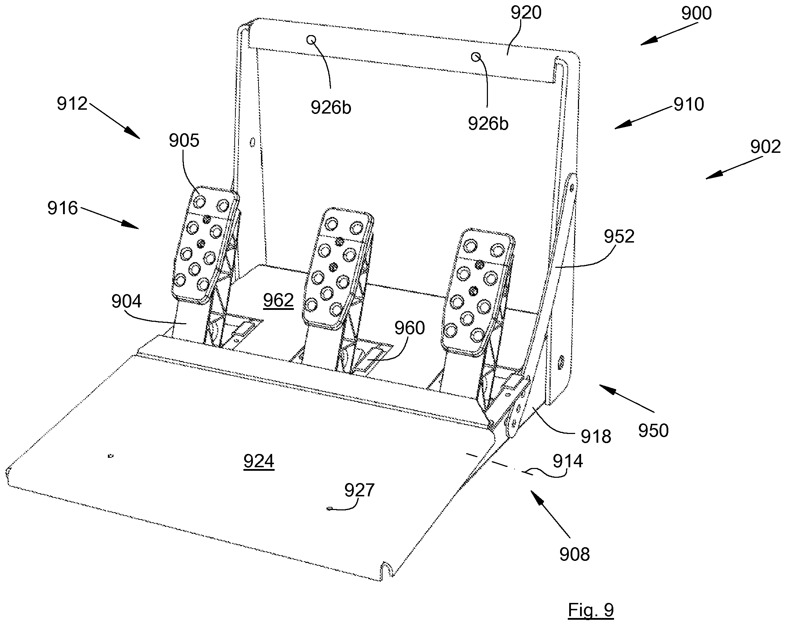

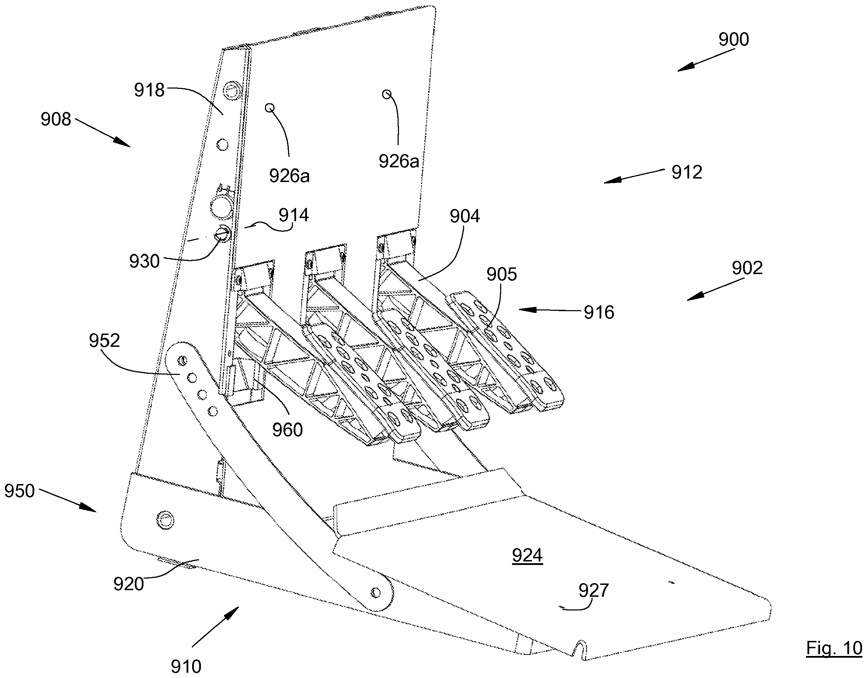

Dans la description qui suit, les termes relatifs à une position sont pris en référence à un pédalier en position d'utilisation soit dans la première position représentée sur la Fig. 1 et sur la Fig. 9, soit dans la deuxième position représentée sur la Fig. 2 et sur la Fig. 10.

La Fig. 1 montre un pédalier 100 pour jeu vidéo ou pour la simulation de conduite de véhicules selon un premier mode de réalisation de l'invention dans une première position d'utilisation et la Fig. 2 montre le même pédalier 100 dans une deuxième position d'utilisation.

Le pédalier 100 comporte:
- un châssis 102 présentant un profil sensiblement triangulaire,
- au moins un bras de levier 104 monté mobile en rotation sur le châssis 102 au niveau de l'un des coins 106 du triangle, et
- pour chaque bras de levier 104, une tête de pédale (non représentée) présentant une zone d'appui pour au moins un pied.

Le châssis 102 présente trois faces 108, 110 et 112, deux de ces faces 108 et 110 sont destinées à se positionner sur le sol et correspondent chacune à une position stable d'utilisation du pédalier 100.

Chaque pédale 116 est ainsi constituée d'un bras de levier 104 et d'une tête de pédale.

Une position stable est une position dans laquelle, un joueur utilisant le pédalier 100 n'a pas besoin de fixer le pédalier 100 pour s'en servir. La géométrie du pédalier 100 est telle que l'appui sur les pédales 116 n'entraîne aucun déplacement du pédalier 100 sous les efforts auxquels sont soumises les pédales 116.

Les faces 108 et 110 qui correspondent aux deux positions d'utilisation du pédalier 100 reposent sur le sol et quelle que soit la position du pédalier 110, le centre de gravité du pédalier 100 se trouve au-dessus de la face 108, 110 qui est utilisée comme cela est vu sur les Figs. 1 et 2.

Le pédalier 100 reste ainsi sous les pieds du joueur et ne risque pas de lui tomber sur les pieds, contrairement à un pédalier qui serait fixé sous un support lorsque les pédales sont suspendues et qui pourrait tomber sur les pieds de l'utilisateur.

La première position est telle que pour ladite ou chaque pédale 116, l'axe de rotation 114 est à l'extrémité inférieure de ladite pédale 116 et donc dudit bras de levier 104, et la deuxième position est telle que pour ladite ou chaque pédale 116, l'axe de rotation 114 est à l'extrémité supérieure de ladite pédale 116 et donc dudit bras de levier 104.

Il suffit donc de retourner le pédalier 100 pour passer d'une position stable d'utilisation du pédalier 100 à une autre. Il n'y a pas besoin d'outil.

En effet, pour changer le pédalier 100 de position stable alors qu'une première face de positionnement 108 est en appui sur le sol ou sur le support du pédalier (le support du pédalier étant alors posé ou fixé au sol), il suffit de pivoter le pédalier 100 autour d'un axe sensiblement parallèle à l'axe de rotation des pédales 116 dudit pédalier 100 jusqu'à ce que sa seconde face de positionnement 110 soit en appui sur le sol ou sur le support du pédalier, puis il convient de pivoter le pédalier 100 d'un angle de 180 degrés autour d'un axe sensiblement orthogonal par rapport à la surface du sol ou du support du pédalier, enfin de réassigner la fonction des pédales 116 en fonction de la position du pédalier 100 grâce à un sélecteur décrit ci-après.

Un procédé de changement de position du pédalier 100 comporte ainsi:
- une étape de pivotement du pédalier 100 autour d'un axe sensiblement parallèle à l'axe de rotation de la ou chaque pédale 116 de manière à passer de la première position stable, c'est-à-dire de la position en appui sur la première face 108, à la deuxième position stable, c'est-à-dire à la position en appui sur la deuxième face 110, et
- une étape de réassignation de la fonction de la ou d'au moins une des pédales 116, qui sera explicitée ci-après.

Pour réorienter le pédalier 100 si nécessaire, le procédé de changement de position comprend en outre une étape de pivotement du pédalier 100 autour d'un axe sensiblement orthogonal à la surface du sol ou du support du pédalier 100, c'est-à-dire orthogonal à la face 108, 110 en appui.

Ce procédé est réversible pour positionner le pédalier 100 sur la première face de positionnement 108.

Ainsi le pédalier 100 comporte au moins une pédale 116 montée mobile en rotation par rapport audit châssis 102 et la première position stable est celle dans laquelle, vue de la gauche du pédalier 100, ladite ou chaque pédale 116 pivote dans le sens inverse de celui des aiguilles d'une montre sous les efforts produits par au moins un pied pour actionner ladite pédale 116, et la deuxième position stable est celle dans laquelle, vue de la gauche du pédalier 100, ladite ou chaque pédale 116 pivote dans le sens des aiguilles d'une montre sous les efforts produits par ledit ou lesdits pieds pour actionner ladite pédale 116.

Comme cela est explicité ci-après, la zone d'appui de la ou chaque pédale 116 est, dans chaque position, disposée de manière à se positionner sensiblement au niveau du métatarse dudit pied.

Comme cela est visible sur la Fig. 1, lorsque le pédalier 100 est dans la première position stable, la tête de la pédale 116 est au-dessus de son axe de rotation 114 et le bras de levier 104 s'étend à partir de l'axe de rotation 114 vers l'arrière du pédalier 100, c'est-à-dire que l'extrémité libre du bras de levier 104 s'éloigne de la position où est posé le pied du joueur.

Comme cela est visible sur la Fig. 2, lorsque le pédalier 100 est dans la deuxième position stable, la tête de la pédale 116 est au-dessous de son axe de rotation 114, et le bras de levier 104 s'étend à partir de l'axe de rotation 114 vers l'avant du pédalier 100, c'est-à-dire que l'extrémité libre du bras de levier 104 se rapproche de la position où est posé le pied du joueur.

Le profil du châssis 102 est de préférence approximativement celui d'un triangle isocèle. Les faces 108 et 110 sont quasiment de même longueur (la différence de longueur autorisant le pliage du châssis 102 pour faciliter le rangement) comme décrit ci-après.

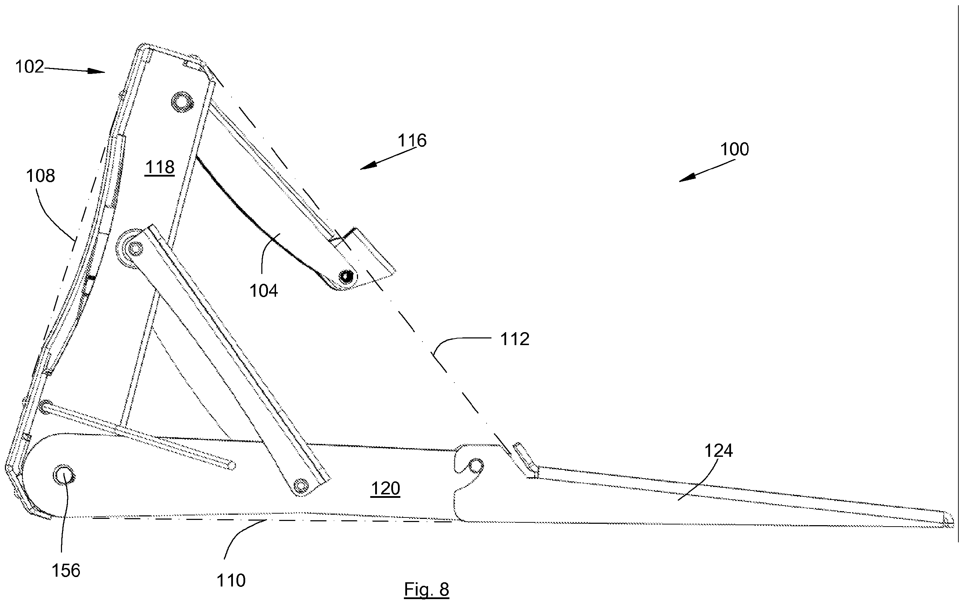

La Fig. 8 montre le pédalier 100 dans la deuxième position d'utilisation.

Pour que l'utilisateur soit confortablement installé, que le pédalier 100 soit dans la première position ou dans la deuxième position, la zone d'appui de la ou chaque tête de pédale est, dans chaque position, disposée de manière à se positionner sensiblement au niveau du métatarse du pied de l'utilisateur.

La zone d'appui est sensiblement disposée au niveau de la bissectrice de l'angle formé par l'intersection des faces 108 et 110.

La zone d'appui de la ou chaque tête de pédale est, dans chaque position, disposée sensiblement au voisinage du milieu de la troisième face 112 qui n'est pas ici délimitée par des éléments mécaniques.

La zone d'appui de la ou chaque tête de pédale reste à une hauteur par rapport au sol sensiblement égale, que le pédalier 100 soit dans la première position ou dans la deuxième position. Cette hauteur peut néanmoins être ajustée par exemple en modifiant l'inclinaison de la tête de pédale.

La distance entre le point d'appui du talon du pied de l'utilisateur et le point d'appui sur la zone d'appui de la tête de pédale est égale à 190 mm (+ ou - 25 mm).

Le châssis 102 présente ainsi une première partie 118 qui porte une des deux faces de positionnement 108 et les pédales 116.

Le châssis 102 présente ainsi une deuxième partie 120 fixée à la première partie 118 et qui porte l'autre face de positionnement 110.

Le positionnement de la première partie 118 et de la deuxième partie 120 est ainsi celle d'un triangle ouvert, c'est-à-dire d'un L.

La troisième face 112 est délimitée par les extrémités de la première partie 118 et de la deuxième partie 120.

La zone d'appui qui est sensiblement à l'extrémité du bras de levier 104 est dans l'angle intérieur formé par les branches du L ou par les plans qui correspondent aux faces de positionnement 108, 110.

La zone d'appui est équidistante des bords de la troisième face 112, c'est-à-dire des extrémités de la première partie 118 et de la deuxième partie 120, c'est-à-dire à l'intérieur du L.

Le pédalier 100 comporte des moyens de détection qui permettent de détecter pour chaque pédale 116 lorsque la pédale 116 est actionnée, c'est-à-dire quand l'utilisateur appuie sur la pédale 116.

Le pédalier 100 comporte également une unité de contrôle qui reçoit les informations des moyens de détection et les transmet à une unité centrale, par exemple du type ordinateur, pour interagir avec le jeu vidéo lui-même exécuté par l'unité centrale ou par une plateforme de jeu en réseau. Cette transmission s'effectuant par un câble électrique 122 ou par liaison sans fil.

L'enfoncement de chaque pédale 116 entraîne une interaction particulière avec le jeu vidéo, et le retournement du pédalier 100 entraîne l'inversion de la position des pédales 116 par rapport à l'utilisateur. Par exemple, la pédale d'embrayage devient la pédale d'accélération et inversement. Pour pallier cet inconvénient, un sélecteur permet de réassigner les pédales 116 en fonction de la position du pédalier 100.

Dans le cas d'un pédalier 100 ayant trois pédales 116, la fonction de la pédale 116 centrale reste classiquement inchangée.

Le sélecteur est par exemple un interrupteur manuel. Mais de préférence, le sélecteur est un détecteur de gravité qui délivre des valeurs électriques différentes selon que le pédalier 100 est dans la première position ou dans la deuxième position.

La lecture de la valeur électrique par l'unité de contrôle permet de réassigner les pédales 116.

Le sélecteur peut également consister en un sélecteur logiciel, comme par exemple une icône s'affichant sur un écran d'affichage de l'unité centrale et qui peut être sélectionné par exemple à l'aide d'une souris connectée à ladite unité centrale. La sélection de l'icône permet alors de réassigner les pédales.

Ce sélecteur peut être intégré ou non dans un logiciel de jeu vidéo ou de simulation de conduite de véhicule. Notamment, le sélecteur s'intègre dans une interface graphique du logiciel et il comporte par exemple plusieurs icônes représentant chacune une des positions du pédalier 100 et il suffit à l'utilisateur du pédalier 100 d'activer l'icône correspondant à la position du pédalier 100 pour que le logiciel réassigne les pédales en fonction de leur position sur l'icône activée et donc de leur position effective.

Pour assurer un bon maintien du pédalier 100 au sol, un bon appui au sol du pied de l'utilisateur et un bon confort à l'utilisateur, un caillebotis 124 est fixé de manière amovible au châssis 102 dans le prolongement de la face 108, 110 reposant sur le sol et ceci est possible dans l'une des positions ou les deux positions. Le caillebotis sert de repose talons pour les pieds de l'utilisateur.

Bien sûr selon le mode de réalisation du châssis 102, le caillebotis 124 peut être fixé de manière différente comme par exemple sur la première partie 118 ou sur la deuxième partie 120 selon la position d'utilisation comme cela est explicité ci-dessous pour un autre mode de réalisation de l'invention.

La fixation du caillebotis 124 peut se faire de différentes manières comme par exemple des vis. Dans le mode de réalisation de l'invention présenté ici, le châssis 102 présente des plots 126 et le caillebotis 124 présente des échancrures 128 dans lesquelles se logent lesdits plots 126.

Chaque bras de levier 104 est monté mobile en rotation sur un arbre principal 130 dont l'axe 114 est horizontal et qui est fixé entre deux longerons 132 qui appartiennent à la première partie 118 du châssis 102. Les extrémités de l'arbre principal 130 forment des plots et les échancrures 128 du caillebotis 124 peuvent s'y loger.

Pour assurer le retour à la position neutre de chaque pédale 116, le pédalier 100 comporte pour chaque bras de levier 104, un système de retour élastique 134 qui repositionne ledit bras de levier 104 dans sa position neutre lorsqu'aucune pression ne s'exerce sur lui.

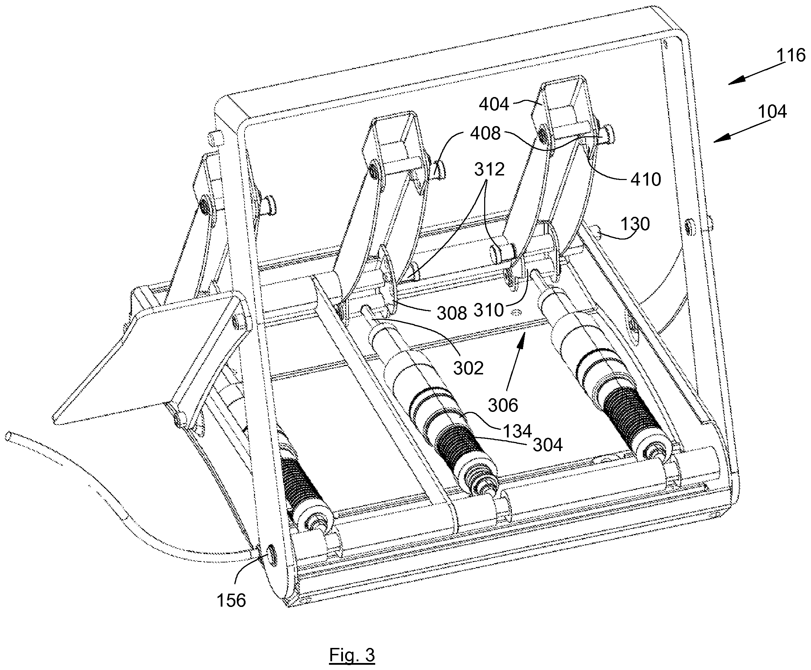

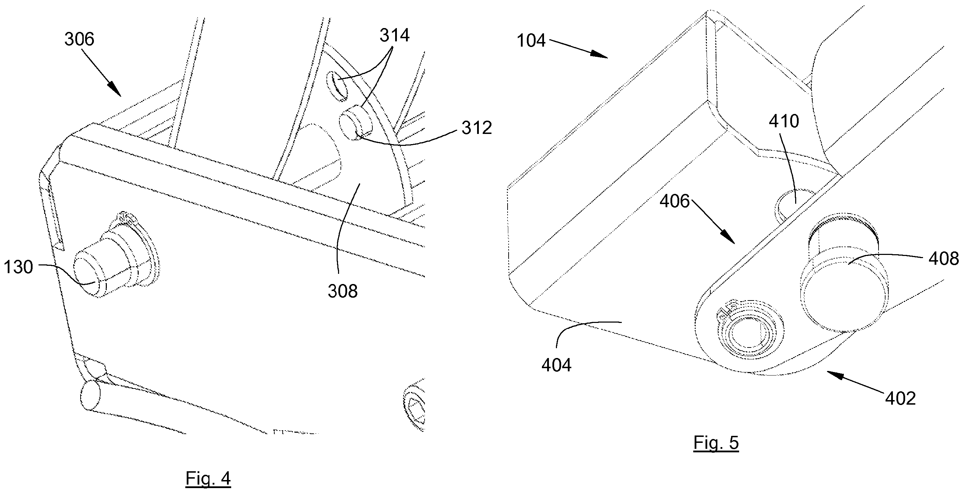

La Fig. 3 et la Fig. 4 montrent la fixation du système de retour élastique 134 à une pédale 116.

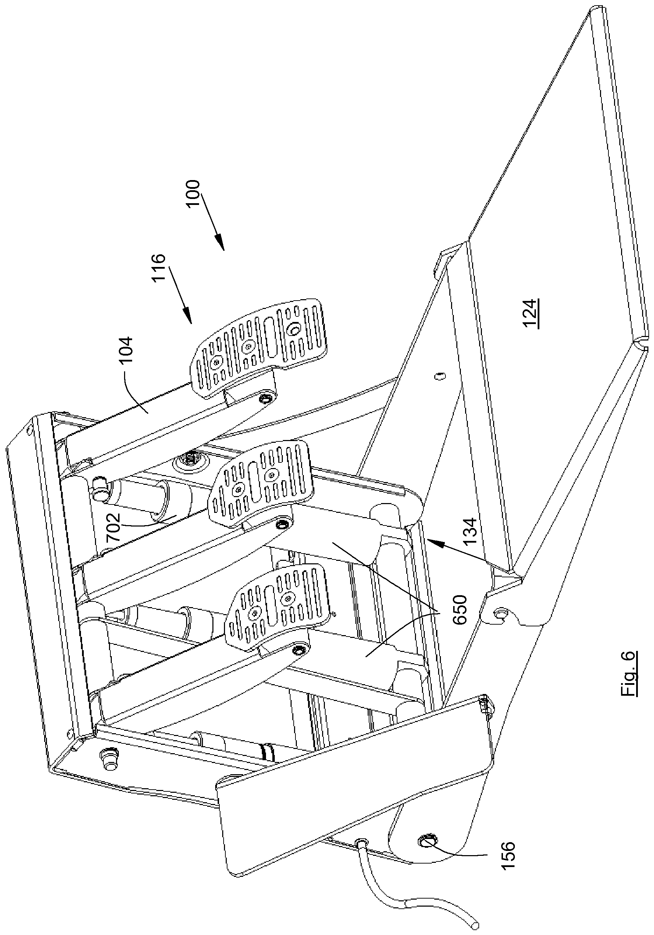

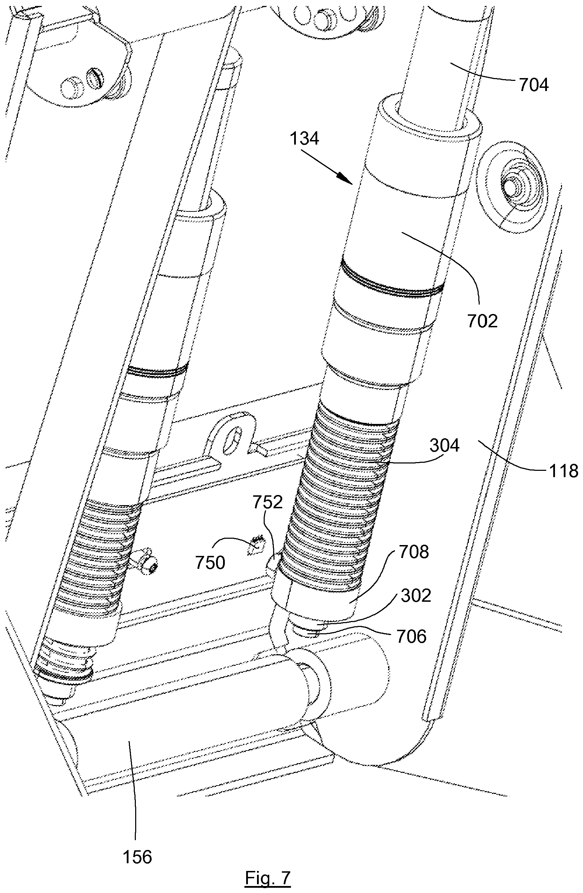

La Fig. 6 et la Fig. 7 montrent les éléments du système de retour élastique 134 et l'assemblage du système de retour élastique 134 sur le châssis 102.

Le système de retour élastique 134 est ici constitué d'une tige 302 qui est fixée par l'une de ses extrémités à un arbre secondaire 156 du châssis 102 et par l'autre de ses extrémités au bras de levier 104 de la pédale 116 considérée, et une série de rondelles Belleville 304 est enfilée sur ladite tige 302.

Le système de retour élastique 134 est une sorte de système de vérin élastique et il est composé principalement de la tige 302 qui porte des rondelles Belleville 304, d'une molette de réglage d'effort 702, d'une butée de fin de course 704 et d'une pièce de liaison 650 entre la molette de réglage d'effort 702 et l'arbre secondaire 156 du châssis 102.

La tige 302 comporte un épaulement depuis l'une des extrémités de la tige 302 sur une partie de la longueur de la tige 302. Une extrémité de cette tige 302 est en liaison avec le bras de levier 104 de la pédale 116 par l'intermédiaire d'un dispositif de réglage intermédiaire 306 (Fig. 3). L'autre extrémité, celle de l'épaulement, comporte un trou coaxial. A proximité de cette extrémité, se trouve une gorge.

Une butée en élastomère 706 est monté dans et dépasse du trou coaxial. Cette butée 706 peut être coaxiale et d'un diamètre inférieur à celui de la tige et donc un diamètre inférieur au diamètre de l'épaulement.

Un anneau en élastomère est monté sur la tige 302 sur la partie de moindre diamètre et il est placé en butée contre l'épaulement.

Un circlips est placé à faible distance de l'extrémité de la tige 302 qui comporte l'épaulement dans la gorge aménagée dans l'épaulement.

Un anneau épais 708 est enfilé sur la tige 302, sur l'épaulement c'est-à-dire sur la partie qui a le diamètre le plus important et vient en butée contre le circlips. La série de rondelles Belleville 304 est enfilée sur l'épaulement de la tige 302.

La molette de réglage d'effort 702 est ensuite enfilée sur une partie de la longueur de l'épaulement de la tige 302. Cette molette de réglage d'effort 702 est coaxiale avec la tige 302 et l'épaulement de la tige 302 peut coulisser dans cette molette de réglage d'effort 702.

La série de rondelles Belleville 304 est prise en sandwich entre l'anneau incompressible et fixe du fait de la présence du circlips et la molette de réglage d'effort 702.

La butée de fin de course 704 est enfilée sur la tige 302 sur la portion qui ne comporte pas d'épaulement. Cette butée de fin de course 704 est en liaison avec la molette de réglage d'effort 702. Une extrémité de la butée de fin de course 704 est filetée et pénètre dans l'extrémité de la molette de réglage d'effort 702 qui est opposée aux rondelles Belleville 304.

Il est possible de visser plus ou moins la molette de réglage d'effort 702 dans la butée de fin de course 704 pour définir la plage de déplacement de la tige 302. En effet, en vissant plus ou moins la butée de fin de course 704 dans la molette de réglage d'effort 702, on ajuste la distance entre la butée de fin de course 704 et l'épaulement de la tige 302 ou l'anneau en élastomère et on règle ainsi la course maximale de la tige 302 entre l'anneau en élastomère qui est placé contre l'épaulement et la butée de fin de course 704.

Le système de retour élastique 134 est monté pivotant par rapport à l'arbre secondaire 156 par l'intermédiaire de la pièce de liaison 650 qui comporte un alésage recevant la tige 302 ainsi que les rondelles Belleville 304 et une partie de la molette de réglage d'effort 702. Elle comporte également un alésage traversé par l'arbre secondaire 156 perpendiculaire par rapport à la tige 302. Il est possible de visser plus ou moins la molette de réglage d'effort 702 dans la pièce de liaison 650 pour pré-contraindre plus ou moins les rondelles Belleville 304.

Lorsque l'utilisateur enfonce la pédale, la tige 302 est tirée par le bras de levier 104 de la pédale mais la molette de réglage est retenue par la pièce de liaison 650 (il y a, par exemple un filetage, entre le diamètre interne de la pièce de liaison 650 et le diamètre externe de la molette de réglage d'effort 702. Les rondelles Belleville 304 sont alors comprimées entre la molette de réglage d'effort 702 et l'anneau fixe. Elles exercent alors une force qui s'oppose au déplacement de la tige 302. Si la force exercée sur la pédale 116 est suffisante, la tige 302 coulisse dans la molette de réglage d'effort 702 et dans la butée de fin de course 704 jusqu'à ce que l'anneau en élastomère qui est placé contre l'épaulement, appuie contre la butée de fin de course 704. Lorsque la pédale 116 n'est plus enfoncée, la tige 302 se déplace en sens inverse et la butée en élastomère 706 qui est placé à l'extrémité de la tige 302 absorbe un choc éventuel contre le fond de l'alésage de la pièce de liaison 650.

En ce qui concerne la pédale de frein, son vérin comporte en outre un ressort qui offre une résistance plus faible sur une première partie de course de la tige 302 et des rondelles Belleville 304 qui offrent une résistance plus grande sur une seconde partie de la course de la tige 302.

Les moyens de détection pour détecter lorsque la pédale 116 est actionnée consiste en des ensembles de détection à effet Hall qui mesurent le déplacement relatif d'un aimant solidaire de la tige 302 par rapport à un capteur à effet Hall 750 solidaire de la première partie 118 du châssis 102. Dans le mode de réalisation des Figs., le pédalier 100 comporte trois pédales 116. Par conséquent, il y a trois tiges 302 et trois capteurs à effet Hall 750. Un aimant 752 est fixé sur l'anneau épais 708 de chaque tige 302. Lorsque l'utilisateur actionne une pédale 116, la tige 302 de son système de retour élastique 134 se déplace, de même que l'anneau épais 708 et donc l'aimant 752 porté par cet anneau épais 708. Le capteur à effet Hall 750 affecté à cet aimant 752 mesure une variation du champ magnétique due au déplacement dudit aimant 752. De cette mesure, l'unité de contrôle déduit les informations relatives au déplacement de l'aimant 752 par rapport au capteur à effet Hall 750, notamment la distance de déplacement, le sens de déplacement et la vitesse de déplacement. Les champs magnétiques traversant la matière, il est possible de placer un capot par-dessus les capteurs à effet Hall 750 et l'unité de contrôle pour les protéger ainsi que le circuit imprimé (en anglais, Printed Circuit Board ou PCB) sur lequel ils sont soudés (le PCB étant lui-même vissé sur la première partie 118 du châssis 102). La Fig. 2 représente le pédalier 100 avec un capot de protection vissé par-dessus ledit circuit imprimé.

Pour assurer un réglage angulaire de la pédale 116 et donc du bras de levier 104, la fixation entre la tige 302 et le bras de levier 104 s'effectue par l'intermédiaire d'un dispositif de réglage intermédiaire 306. Le dispositif de réglage intermédiaire 306 comporte une chape 308 montée mobile en rotation sur l'arbre principal 130 du châssis 102 et un axe d'ajustement 310 parallèle à l'arbre principal 130 et mobile en rotation sur ladite chape 308.

La tige 302 du système de retour élastique 134 est fixée à l'axe d'ajustement 310.

Le dispositif de réglage intermédiaire 306 comporte également des moyens de verrouillage qui verrouillent la position du bras de levier 104 et donc de la pédale 116 par rapport à la chape 308.

Les moyens de verrouillage prennent ici la forme d'un plot escamotable 312 et d'une série d'au moins deux trous 314. Le bras de levier 104 porte le plot escamotable 312 monté sur ressort et la chape 308 présente la série de trous 314 destinés à recevoir ledit plot escamotable 312.

Pour régler l'angle, l'utilisateur escamote le plot escamotable 312 en tirant dessus pour le sortir du trou 314 dans lequel il se trouve, puis il fait tourner le bras de levier 104 de manière à aligner le plot escamotable 312 avec un autre trou 314, puis il relâche le plot escamotable 312 qui s'enfonce dans ledit autre trou 314 sous l'action du ressort.

La Fig. 5 montre un détail de l'extrémité libre d'un bras de levier 104.

Pour permettre de positionner la tête de pédale correctement en fonction des envies du joueur, la pédale 116 comporte, au voisinage de l'extrémité libre du bras de levier 104, un dispositif d'orientation intermédiaire 402 sur lequel est fixée la tête de pédale.

Le dispositif d'orientation intermédiaire 402 comporte une chape 404 montée mobile en rotation à l'extrémité libre du bras de levier 104 et un dispositif de fixation 406 qui fixe la position de la chape 404 par rapport au bras de levier 104.

La tête de pédale est montée sur la chape 404. La forme de la tête de pédale peut être symétrique pour éviter d'avoir à la pivoter lorsque l'utilisateur change la position du pédalier 100.

Le dispositif de fixation 406 prend ici une forme similaire à celle du dispositif de verrouillage précédent. Le bras de levier 104 porte un plot escamotable 408 et la chape 404 présente une série d'au moins deux trous 410 prévus pour recevoir ledit plot escamotable 408.

Pour faciliter le rangement du pédalier 100, le coin 150 entre les deux faces de positionnement 108 et 110, forme une charnière. C'est-à-dire que la première partie 118 et la deuxième partie 120 sont montées l'une avec l'autre par l'intermédiaire d'une charnière.

Pour faciliter le rangement, chaque pédale 116 doit être repliée vers l'intérieur du châssis 102, c'est-à-dire ici à l'intérieur de la première partie 118, ici entre les deux longerons 132. Ce rangement est rendu possible grâce au dispositif de réglage intermédiaire 306 qui comporte un trou 314 dédié à ce rangement.

Pour assurer le maintien du pédalier 100 en position d'utilisation, au moins une biellette 152, dénommée ci-après "entretoise", montée de manière amovible par exemple à l'aide de vis, est prévue entre la première partie 118 portant la face de positionnement 108 et la deuxième partie 120 portant la face de positionnement 110.

La ou l'une des entretoises 152 peut être remplacée par un repose-pied 154.

La Fig. 9 montre un pédalier 900 pour jeu vidéo selon un deuxième mode de réalisation de l'invention dans une première position d'utilisation et la Fig. 10 montre le même pédalier 900 dans une deuxième position d'utilisation. Le procédé de changement de position du pédalier 900 est similaire à celui présenté ci-dessus pour le pédalier 100 du premier mode de réalisation de l'invention.

Le pédalier 900 comporte:
- un châssis 902 présentant un profil sensiblement triangulaire,
- au moins un bras de levier 904 monté mobile en rotation par rapport au châssis
   902, et
- pour chaque bras de levier 904, une tête de pédale 905 présentant une zone d'appui pour au moins un pied de l'utilisateur.

Le châssis 902 présente trois faces 908, 910 et 912, deux de ces faces 908 et 910 sont destinées à se positionner sur le sol et correspondent chacune à une position stable d'utilisation du pédalier 900.

Comme pour le premier mode de réalisation de l'invention, le pédalier 900 est tel que la première position stable est celle dans laquelle, vue de la gauche du pédalier 900, ladite ou chaque pédale 916 pivote dans le sens inverse de celui des aiguilles d'une montre sous les efforts produits par au moins un pied pour actionner ladite pédale 916, et la deuxième position stable est celle dans laquelle, vue de la gauche du pédalier 900, ladite ou chaque pédale 916 pivote dans le sens des aiguilles d'une montre sous les efforts produits par ledit ou lesdits pieds pour actionner ladite pédale 916.

Chaque pédale 916 est ainsi constituée d'un bras de levier 904 et d'une tête de pédale 905.

Pour permettre un meilleur réglage de la tête de pédale 905 au(x) pied(s) de l'utilisateur, la tête de pédale 905 peut comprendre un support de tête amovible 907 pouvant être remplacé par un support de tête différent. Le support de tête 907 permet de modifier par exemple l'inclinaison de la tête de pédale 905 par rapport au bras de levier 904.

Le support de tête 907 se place ainsi entre le bras de levier 904 et la tête de pédale 905 et il permet de modifier l'inclinaison de la tête de pédale 905 et la hauteur de la tête de pédale 905 par rapport au bras de levier 904.

Le passage d'une position stable à l'autre position stable peut nécessiter la rotation de la tête de pédale 905 et du support de tête 907 de 180°. Pour cela, il suffit de dévisser les vis retenant la tête de pédale 905 et le support de tête 907.

Le support de tête 907 comporte une surface plane qui vient en contact avec une partie plane du bras de levier 904 et une surface arrondie sur laquelle repose la tête de pédale 905.

La partie plane du bras de levier 904 peut comporter plusieurs séries de trous qui permettent de choisir la position de vissage de la tête de pédale 905 et du support de tête 907 sur le bras de levier 904 permettant ainsi d'ajuster d'une part, la hauteur du support de tête 907 et donc de la tête de pédale 905 par rapport au bras de levier 904, et d'autre part, la position transversale de la tête de pédale 905 par rapport au bras de levier 904 et donc l'espacement entre les têtes de pédales 905.

Bien sûr d'autres systèmes de réglage peuvent être mis en place.

La première position est telle que pour ladite ou chaque pédale 916, l'axe de rotation 914 est à l'extrémité inférieure de ladite pédale 916 et donc dudit bras de levier 904, et la deuxième position est telle que pour ladite ou chaque pédale 916, l'axe de rotation 914 est à l'extrémité supérieure de ladite pédale 916 et donc dudit bras de levier 904.

Il suffit donc de retourner le pédalier 900, de sorte que la face de positionnement en appui avec le sol ou un support, tel qu'un cockpit, par exemple, ne soit plus la face de positionnement 908 mais la face de positionnement 910, pour passer d'une position stable d'utilisation du pédalier 900 à une autre.

La Fig. 10 montre le pédalier 900 dans la deuxième position d'utilisation.

La zone d'appui de la ou chaque tête de pédale est sensiblement disposée au niveau de la bissectrice de l'angle formé par l'intersection des faces de positionnement 908 et 910.

La zone d'appui de la ou chaque tête de pédale reste à une hauteur par rapport au sol (ou au support du pédalier) sensiblement égale, que le pédalier 900 soit dans la première position ou dans la deuxième position à condition de pivoter la tête de pédale de 180 degrés.

Pour que l'utilisateur soit confortablement installé, que le pédalier 900 soit dans la première position ou dans la deuxième position, la zone d'appui de la ou chaque tête de pédale 905 est, dans chaque position, disposée de manière à se positionner sensiblement au niveau du métatarse du pied de l'utilisateur. Si la surface d'appui est réduite, par exemple en cas d'utilisation d'une petite tête de pédale, la zone d'appui de la ou chaque tête de pédale 905 est, dans chaque position, disposée de manière à se positionner sensiblement au niveau de la tête des os métatarsiens.

Comme pour le premier mode de réalisation de l'invention, la zone d'appui qui est sensiblement à l'extrémité du bras de levier 904 est disposée entre la première partie 918 et la deuxième partie 920, c'est-à-dire à l'intérieur du triangle et à l'intérieur du L que la première partie 918 et la deuxième partie 920 forment.

Pour améliorer le confort de l'utilisateur, le pédalier 900 comporte un caillebotis 924 fixable de manière amovible au châssis 902 alternativement sur la première partie 918 dans la première position d'utilisation ou sur la deuxième partie 920 dans la deuxième position d'utilisation. Ainsi, la zone d'appui de chaque pédale 916 est disposée entre les deux éléments supportant alternativement le caillebotis 924, c'est-à-dire ici le châssis de la première partie 918 et le châssis de la deuxième partie 920.

Par conséquent, comme pour le premier mode de réalisation, la zone d'appui est dans l'angle intérieur formé par les branches du L ou par les plans qui correspondent aux faces de positionnement 908, 910.

Le caillebotis 924 sert de repose talons aux pieds de l'utilisateur et il peut présenter une surface anti-dérapante pour éviter le glissement des talons.

La distance entre le point d'appui du talon du pied de l'utilisateur sur le caillebotis 924 et le point d'appui sur la zone d'appui de la tête de pédale est égale à 190 mm (+ ou - 25 mm).

Le châssis 902 présente ainsi une première partie 918 qui porte une des deux faces de positionnement 908 et les pédales 916.

Le châssis 902 présente ainsi une deuxième partie 920 montée sur la première partie 918 et qui porte l'autre face de positionnement 910.

La troisième face 912 est sensiblement délimitée par les extrémités de la première partie 918 et de la deuxième partie 920.

Comme pour le premier mode de réalisation de l'invention, le pédalier 900 comporte des moyens de détection qui permettent de détecter pour chaque pédale 916 lorsque la pédale 916 est actionnée.

Le pédalier 900 comporte également une unité de contrôle qui reçoit les informations des moyens de détection et les transmet à une unité centrale.

Le retournement du pédalier 900 entraîne l'inversion de la position des pédales 916 par rapport à l'utilisateur. Par exemple, la pédale d'embrayage devient la pédale d'accélération et inversement. Pour pallier cet inconvénient, un sélecteur permet de réassigner les pédales 916 en fonction de la position du pédalier 900.

Le sélecteur prend par exemple la même forme que celui prévu dans le premier mode de réalisation de l'invention.

La fixation du caillebotis 924 peut se faire de différentes manières. Dans le mode de réalisation de l'invention présenté ici, le châssis 902 présente des trous de vissage 926a et 926b dans lesquels des vis de serrage 927 sont vissées pour assurer la fixation du caillebotis 924.

Dans le mode de réalisation de l'invention présenté ici, il y a deux trous de vissage 926a réalisés dans la première partie 918 et deux trous de vissage 926b réalisés dans la deuxième partie 920. La première partie 918 et/ou la deuxième partie 920 peuvent, en outre, porter des équerres et dans chacune de ces équerres, une vis se visse pour assurer une meilleure fixation du caillebotis 924. Le caillebotis 924 peut également comporter plus de deux trous de vissage.

Le caillebotis 924 peut être fixé à différents endroits de la première partie 918 et de la deuxième partie 920 afin de le positionner de façon optimale pour l'utilisateur, c'est-à-dire de manière à ce que la distance entre le talon de l'utilisateur et la zone d'appui des pédales corresponde bien aux dimensions des pieds de l'utilisateur. A cette fin, le châssis 902 peut comporter des trous de vissage répartis à différents endroits pour permettre une pluralité de positions de fixation du caillebotis 924.

Le caillebotis 924 peut présenter un pli et les différentes positions pour ledit caillebotis 924 permettent à un utilisateur de positionner ce pli de manière à ce qu'il guide son talon ou de manière à ce qu'il n'entre pas en contact avec son talon et présente ainsi une surface libre sur laquelle le talon peut se déplacer librement.

Par ailleurs, le caillebotis peut avoir une forme différente. Il peut, par exemple, comporter deux plis et une découpe séparant ces deux plis. Le premier pli correspond alors aux pédales de frein et d'accélération qui sont actionnées par le même pied et le second pli correspond à la pédale d'embrayage actionnée par l'autre pied.

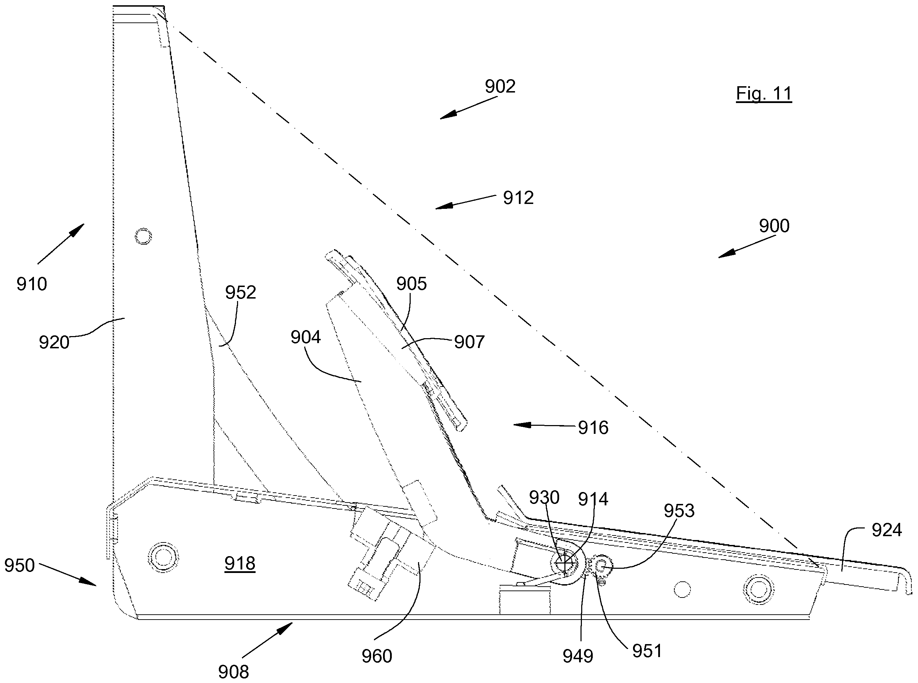

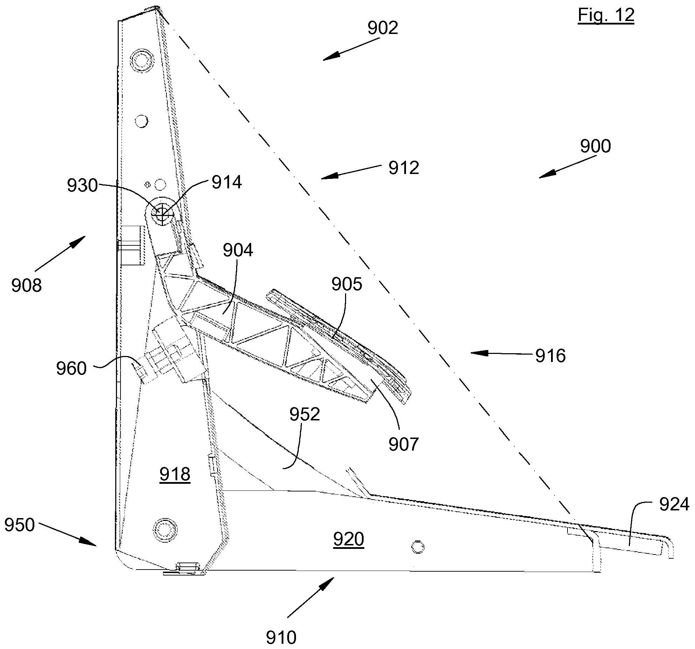

La Fig. 11 et la Fig. 12 montrent un autre mode de fonctionnement des pédales 916, mais il est possible d'utiliser le même mécanisme que celui utilisé dans le premier mode de réalisation de l'invention.

Chaque bras de levier 904 est monté mobile en rotation sur un arbre principal 930 dont l'axe 914 est horizontal et qui est fixé à la structure de la première partie 918.

Dans le mode de réalisation de l'invention présenté ici, la première partie 918 est constituée de trois modules identiques qui sont fixés les uns aux autres. Chaque module présente une structure rigide et une pédale 916 fixée à la structure rigide par son arbre 930.

Pour assurer le retour à la position neutre de chaque pédale 916, le pédalier 900 comporte pour chaque bras de levier 904, un système de retour élastique 934 qui est ici constitué de deux ressorts de torsion 934 dont le premier de leurs bras est en appui contre une butée de la première partie 918 et dont le second de leurs bras est en appui contre une butée du bras de levier 904.

Les moyens de détection pour détecter lorsque la pédale 916 est actionnée consistent ici en un potentiomètre 953 fixé sur la première partie 918. Dans le mode de réalisation de l'invention présenté ici, un engrenage 951 est solidaire du potentiomètre 953 et un engrenage 949 est solidaire du bras de levier 904. Les deux engrenages 949 et 951 engrènent l'un avec l'autre. Ainsi, la rotation de la pédale 916 entraîne la rotation de son engrenage 949 et donc de l'engrenage 951 du potentiomètre 953 dont la valeur varie en conséquence. Bien sûr, il est possible de mettre en oeuvre des moyens de détection similaires à ceux utilisés dans le premier mode de réalisation de l'invention.

Pour faciliter le rangement du pédalier 900, le coin 950 entre les deux faces de positionnement 908 et 910, forme une charnière. C'est-à-dire que la première partie 918 et la deuxième partie 920 sont montées l'une avec l'autre par l'intermédiaire d'une charnière. Il est ainsi possible de replier le châssis 902 par l'extérieur afin que le pédalier 900 prenne moins de place. Il est également possible de livrer le pédalier 900 avec les pédales 916 pré-contraintes afin que le pédalier 900 prenne moins de place.

Pour assurer le maintien du pédalier 900 en position d'utilisation, au moins une entretoise 952 montée de manière amovible par exemple à l'aide de vis, est prévue entre la première partie 918 portant la face de positionnement 908 et la deuxième partie 920 portant la face de positionnement 910.

Bien sûr comme pour le premier mode de réalisation de l'invention, il est possible de prévoir, pour chaque pédale 916, un dispositif de réglage intermédiaire destiné à permettre le réglage angulaire de ladite pédale 916 similaire à celui du premier mode de réalisation de l'invention.

Comme précédemment indiqué, le support de tête 907 permet notamment de modifier l'orientation de la tête de pédale 905 par rapport au bras de levier 904. Il est également possible de supprimer le support de tête 907 ou de le compléter par un autre dispositif d'orientation intermédiaire destiné à orienter la tête de pédale 905 par rapport au bras de levier 904.

Les Figs. 9 à 12 montrent également pour chaque pédale 916, une butée 960 qui est fixée de manière amovible au châssis 902 et qui comprend une zone de butée sur laquelle la pédale 916 vient en butée lorsqu'elle est actionnée par le pied.

La butée 960 est ici fixée par des vis qui peuvent être retirées. Après retrait des vis, il est alors possible de retourner la butée 960 et de la mettre en appui contre le bras de levier 904 et de revisser les vis. La pédale 916 est alors pré-contrainte par la butée 960 ce qui améliore la compacité du pédalier 900 lors de son rangement par exemple dans la boîte de livraison.

En position de fonctionnement, la butée 960 est réglable en position de manière à permettre un déplacement de la zone de butée le long de la pédale 916. Le changement de position de la butée 960 permet de régler la course de la pédale 916 et sa résistance à l'enfoncement.

Le déplacement de la butée 960 s'effectue le long du châssis 902.

Bien entendu, la présente invention n'est pas limitée aux exemples et modes de réalisation décrits et représentés, mais elle est susceptible de nombreuses variantes accessibles à l'homme de l'art.

La tête de pédale peut être montée sur un dispositif de rotation de la tête de pédale. La tête de pédale peut être montée sur une plaque intermédiaire montée pivotante par rapport à la chape 404 et la chape 404 peut être munie d'un second dispositif de verrouillage pour verrouiller la position angulaire de la tête de pédale par rapport à la chape 404 c'est-à-dire d'un plot escamotable orthogonal par rapport à la plaque intermédiaire. La plaque présente une série d'au moins deux trous prévus pour recevoir ledit plot escamotable. Etant donné que le passage d'une position stable à l'autre position stable peut nécessiter la rotation de 180° de la tête de pédale, un tel dispositif de rotation de la tête de pédale permet d'effectuer la rotation sans outil.

Ladite plaque intermédiaire peut être plus ou moins épaisse pour ajuster la distance entre la tête de pédale et la chape 404 et donc le bras de levier 104.

D'autres moyens de détection peuvent être utilisés pour détecter lorsque la pédale est actionnée.

Des jauges de contraintes peuvent être placées sur le bras de levier 104 de la pédale 116 pour mesurer les efforts exercés sur la pédale 116.

Pour chaque pédale 116 dans le cas du premier mode de réalisation, son système de retour élastique 134 peut comporter un potentiomètre linéaire placé entre son anneau épais et sa pièce de liaison pour détecter le déplacement de l'anneau épais et les données relatives à sa translation par rapport à la pièce de liaison 650 et donc par rapport au châssis 102.

Dans une variante, la première partie 118 et la deuxième partie 120 ne sont pas montées l'une avec l'autre par l'intermédiaire d'une charnière, mais elles sont montées de façon amovible l'une par rapport à l'autre. La deuxième partie 120 présente deux échancrures dans lesquelles se logent les extrémités de l'arbre secondaire 156 qui traverse la première partie 108 parallèlement au coin 150. Pour une rigidité accrue, lesdites extrémités peuvent être filetées et des écrous, tel qu'un écrou à oreille, peuvent y être utilisés pour maintenir de façon réversible la première partie 118 solidaire avec la deuxième partie 120.

Ainsi, il est possible de prévoir que la deuxième partie 120, 920 est un élément additionnel qui vient se fixer sur la première partie 118, 918. La première partie 118, 918 assure ainsi l'une des positions stables et la mise en place de la deuxième partie 120, 920 permet de créer la deuxième position stable.

A cette fin, la deuxième partie 120, 920 comporte des moyens de fixation à la première partie 118, 918. Par exemple, la première partie 118, 918 peut comporter des trous de vissage sur les côtés à proximité de son extrémité arrière et la deuxième partie 120, 920 peut aussi comporter un trou de vissage à proximité de chacune de ses extrémités. Il suffit alors d'aligner les trous et de visser une vis de fixation. Il peut également s'agir de plots escamotables à ressort fixés sur l'une des parties et venant se loger dans des trous appropriés de l'autre partie.

Ainsi dans ce mode de réalisation, le châssis 102, 902 est constitué de la première partie 118, 918 supportant les pédales 116, 916 et d'une deuxième partie 120, 920 qui est fixée de manière amovible sur ladite première partie 118, 918.

Un tel assemblage permet de faciliter le rangement et limite l'encombrement si seule la première position stable est utilisée.

La deuxième partie 120, 920 peut prendre la forme d'un arceau ou d'un support en forme d'équerre.

Que ce soit dans le cas où la deuxième partie 120, 920 est amovible ou dans le cas où elle ne l'est pas, il est possible de prévoir qu'il y ait en fait plusieurs deuxièmes parties 120, 920, chacune étant fixée de manière amovible sur la première partie 118, 918 ou sur une autre des deuxièmes parties 120, 920, ou qu'il y ait plusieurs deuxièmes parties 120, 920, chacune étant montée mobile en rotation par rapport à la première partie 118, 918 ou par rapport à une autre des deuxièmes parties 120, 920.

Le châssis 102, 902 peut alors, selon le nombre de parties 118, 120, 918, 920, prendre une forme différente. Il peut avoir un profil rectangulaire avec quatre parties, triangulaires avec trois ou deux parties comme décrit ci-dessus.

Les différentes parties peuvent constituer un châssis pliable et être maintenues en place par serrage ou par la mise en place d'entretoises ou d'équerres.

Il est également possible de prévoir que l'une ou les deux parties 118, 120, 918, 920 soient constituées d'au moins deux pièces qui sont montées de manière télescopique les unes avec les autres, c'est-à-dire qu'elles peuvent coulisser les unes par rapport aux autres. Afin de fixer les pièces les unes par rapport aux autres, des moyens de blocage, comme des vis (ou des plots escamotables à ressort) et des trous réalisés dans les différentes pièces sont mis en place.

Bien sûr, il est possible de prévoir qu'une ou plusieurs zones d'appui puissent être activées par plus d'un pied. A cette fin, la tête de pédale peut être agrandie pour offrir une grande zone d'appui et elle pourrait être fixée sur un seul ou sur deux bras de levier.

Le pédalier 100, 900 selon l'invention a été décrit comme reposant sur le sol, mais il est également possible de prévoir qu'il soit fixé, dans l'une ou l'autre des positions, dans un cockpit reproduisant en tout ou partie la forme du véhicule simulé, ou sur un support dédié aux simulations de conduite constitué d'un siège de simulation de conduite comportant un support pour un volant et un support pour un pédalier.

Comme cela a été décrit ci-dessus, la zone d'appui est à l'intérieur du L formé par la première partie 118, 918 et la deuxième partie 120, 920, mais les dimensions de la première partie 118, 918 et/ou de la deuxième partie 120, 920 peuvent être telles que la zone d'appui se trouve située en dehors du triangle, c'est-à-dire au-delà de la face 112, 912. Par exemple, il est possible de diminuer les dimensions du châssis 102, 902 et donc des parties 118, 918, 120, 920 le constituant, mais il faut veiller à ce que lorsque l'utilisateur actionne une pédale 116, 916, l'extrémité du pied de l'utilisateur débordant de la tête de pédale, c'est-à-dire la pointe du pied, ne touche pas la partie du châssis 102, 902 qui n'est pas la partie sur laquelle appuie le talon. Pour cela, il est possible d'augmenter l'angle entre les faces 108, respectivement 908 et 110, respectivement 910, cet angle pouvant être supérieur à 90 degrés. Pour cela, les points d'ancrage des entretoises 152, 952 au châssis 902 permettent de les positionner de telle sorte qu'elles maintiennent l'angle voulu entre la première partie 118, 918 et la deuxième partie 120, 920. Pour préserver l'équilibre du pédalier 100, 900, un lest peut être fixé de manière amovible au châssis 102, 902 et/ou au caillebotis.

Il est possible d'ajouter un dispositif d'inclinaison permettant d'ajuster l'inclinaison du châssis 102, 902 par rapport au sol. Ce dispositif d'inclinaison peut consister en deux pieds s'étendant longitudinalement par rapport au châssis 102, 902 et se fixant par des vis sur les côtés du châssis 102, 902, c'est-à-dire soit sur les côtés de la première partie 108, 908, soit sur les côtés de la deuxième partie 120, 902.

Les deux pieds pourraient être remplacés par un seul pied.

Les deux pieds pourraient être remplacés par deux pieds cylindriques à vis pouvant se visser à plusieurs emplacements alternatifs en fonction du sens d'inclinaison et de la position du pédalier.

On peut aussi prévoir un arceau en forme de U avec des trous sur les côtés et qui peut être monté pivotant de façon amovible autour de l'arbre transversal arrière ou autour de l'arbre transversal avant et deux biellettes (ou entretoises) supplémentaires à trous maintenant ledit arceau dans la position voulue.

On peut également envisager l'ajout d'un plateau horizontal en contact avec le sol et monté pivotant par rapport à l'un des arbres transversaux du châssis et un ou plusieurs bras dont une des extrémités est pivotante par rapport audit plateau et dont l'autre extrémité coopère avec des anneaux cylindriques fixés sous le châssis. Un arbre court et une goupille tous les deux amovibles permettent d'éviter que cette extrémité du bras de levier se détache du cylindre.

On peut également envisager un système à glissière se fixant soit derrière le châssis ou aux côtés du châssis et comportant un ou plusieurs plot(s) escamotable(s) à ressort porté(s) par un premier élément du système à glissière et une ou plusieurs série(s) de trous réalisée(s) dans l'autre élément du système à glissière et destinée(s) à recevoir ledit ou lesdits plots escamotables de façon à maintenir le système à glissière dans la position voulue et donc l'inclinaison voulue.

Pour protéger le pédalier et les éléments qui n'ont pas à être manipulés en fonctionnement normal, comme par exemple le potentiomètre 953, une tôle de carénage, de préférence amovible et partiellement surfacée pour remplacer un caillebotis au moins dans une des positions stables du pédalier est mise en place sur le châssis 102, 902.

Une telle tôle de carénage est représentée sur la Fig. 9 et porte la référence 962 et elle peut être pliée.

## Revendications

1. Pédalier (100, 900) pour jeu vidéo ou simulation de conduite de véhicule, ledit pédalier (100, 900) comportant:
- au moins une pédale (116, 916), ladite ou chaque pédale (116, 916) présentant une zone d'appui pour au moins un pied, et
- un châssis (102, 902) comprenant une première partie (118, 918) supportant ladite ou lesdites pédales (116, 916) qui sont montées mobiles en rotation par rapport audit châssis (102, 902),
ladite première partie (118, 918) présentant une face de positionnement (108, 908) pouvant se positionner sur le sol ou un support, selon une première position stable du pédalier (100, 900),
la première position stable étant telle que, vue de la gauche du pédalier (100, 900), ladite ou chaque pédale (116, 916) pivote dans le sens inverse de celui des aiguilles d'une montre sous les efforts produits par ledit au moins un pied pour actionner ladite pédale (116, 916),
ledit pédalier (100, 900) étant **caractérisé en ce que** ledit châssis (102, 902) comporte au moins une deuxième partie (120, 920), ladite au moins deuxième partie (120, 920) étant montée de façon amovible par rapport à ladite première partie (118, 918) ou par rapport à une autre desdites deuxièmes parties (120, 920), ou ladite au moins deuxième partie (120, 920) étant montée mobile en rotation par rapport à ladite première partie (118, 918) ou par rapport à une autre desdites deuxièmes parties (120, 920),
au moins une desdites deuxièmes parties (120, 920) présentant une face de positionnement (110, 910) pouvant se positionner sur le même sol ou le même support, selon une deuxième position stable du pédalier (100, 900),
la deuxième position stable étant telle que, vue de la gauche du pédalier (100, 900), ladite ou chaque pédale (116, 916) pivote dans le sens des aiguilles d'une montre sous les efforts produits par ledit au moins un pied pour actionner ladite pédale (116, 916),
- la zone d'appui de la ou chaque pédale (116, 916) étant, dans chaque position stable, disposée de manière à se positionner sensiblement au niveau du métatarse dudit au moins un pied.

2. Pédalier (100, 900) selon la revendication 1, **caractérisé en ce que** la rotation est réalisée par une charnière entre ladite première partie (118, 918) et ladite deuxième partie (120, 920) ou chacune desdites deuxièmes parties (120, 920).

3. Pédalier (100, 900) selon l'une des revendications 1 à 2, **caractérisé en ce qu'**il y a une seule première partie (118, 918) et une seule deuxième partie (120, 920) assemblées l'une à l'autre en forme de L et **en ce que** les zones d'appui des pédales (116, 916) sont disposées dans l'angle intérieur formé par les branches du L.

4. Pédalier (100, 900) selon l'une des revendications 1 à 3, **caractérisé en ce qu'**il comporte au moins une entretoise (152, 952) fixée de manière amovible entre les deux parties (118, 918, 120, 920) pour les maintenir en position l'une par rapport à l'autre.

5. Pédalier (100, 900) selon l'une des revendications 1 à 4, **caractérisé en ce qu'**il comporte un sélecteur permettant de réassigner au moins l'une des pédales (116, 916) en fonction de la position du pédalier (100, 900).

6. Pédalier (100, 900) selon la revendication 5, **caractérisé en ce que** le sélecteur est un détecteur de gravité.

7. Pédalier (100, 900) selon l'une des revendications 1 à 6, **caractérisé en ce qu'**il comporte, pour ladite ou chaque pédale (116, 916), un dispositif de réglage intermédiaire (306) destiné à permettre le réglage angulaire de ladite pédale (116, 916), ledit dispositif de réglage intermédiaire (306) comportant une chape (308) montée mobile en rotation sur le châssis (102), un axe d'ajustement (310) mobile en rotation sur ladite chape (308) et des moyens de verrouillage qui verrouillent la position de la pédale (116) par rapport à la chape (308), lesdits moyens de verrouillage prenant la forme d'un plot escamotable (312) porté par la pédale (116), et d'une série d'au moins deux trous (314) réalisée dans la chape (308) et destinée à recevoir ledit plot escamotable (312).

8. Pédalier (100, 900) selon l'une des revendications 1 à 7, **caractérisé en ce que** ladite ou chaque pédale (116, 916) est constituée d'un bras de levier (104, 904), d'une tête de pédale portant ladite zone d'appui, et un dispositif d'orientation intermédiaire (402, 907) fixé, d'une part, audit bras de levier (104, 904), et, d'autre part, fixé à ladite tête de pédale, et destiné à orienter ladite tête de pédale par rapport audit bras de levier (104, 904).

9. Pédalier (100, 900) selon l'une des revendications 1 à 8, **caractérisé en ce qu'**il comporte pour la ou chaque pédale (116, 916), une butée (960) fixée de manière amovible audit châssis (102, 902) et comprenant une zone de butée sur laquelle ladite pédale (116, 916) vient en butée lorsqu'elle est actionnée par ledit au moins un pied ou lorsque ladite butée (960) pré-contraint ladite pédale (116, 916).

10. Pédalier (100, 900) selon la revendication 9, **caractérisé en ce que** ladite butée (960) est réglable en position de manière à permettre un déplacement de ladite zone de butée le long de ladite pédale (116, 916).

11. Pédalier (100, 900), selon la revendication 1, **caractérisé en ce que** la deuxième partie (120, 920) prend la forme d'un arceau ou d'un support en forme d'équerre.

12. Procédé de changement de position d'un pédalier (100, 900) selon l'une des revendications 1 à 11, ledit procédé comprenant:
- une étape de pivotement dudit pédalier (100, 900) autour d'un axe sensiblement parallèle à l'axe de rotation de la ou chaque pédale (116) de manière à passer d'une position stable à l'autre position stable, et
- une étape de réassignation de la fonction de la ou d'au moins une des pédales (116).

13. Procédé de changement de position selon la revendication 12, **caractérisé en ce qu'**il comprend en outre une étape de pivotement du pédalier (100, 900) autour d'un axe sensiblement orthogonal à la surface du sol ou du support du pédalier (100, 900).

14. Procédé de changement de position selon la revendication 12, **caractérisé en ce qu'**il comprend en outre une étape de fixation de ladite au moins une deuxième partie (120, 920) à ladite première partie (118, 918).

15. Procédé de changement de position selon la revendication 12, **caractérisé en ce qu'**il comprend en outre une étape de mise en appui de ladite face de positionnement (110, 910) sur le sol ou le support.

## Patentansprüche

1. Pedalgarnitur (100, 900) für ein Videospiel oder eine Fahrzeugfahrsimulation, wobei die Pedalgarnitur (100, 900) Folgendes aufweist:
- mindestens ein Pedal (116, 916), wobei das oder jedes Pedal (116, 916) einen Auflagebereich für mindestens einen Fuß aufweist, und
- einen Rahmen (102, 902), der einen ersten Teil (118, 918) aufweist, der das oder die Pedale (116, 916) trägt, die drehbar in Bezug auf den Rahmen (102, 902) befestigt sind,
wobei der erste Teil (118, 918) eine Positionierfläche (108, 908) aufweist, die in einer ersten stabilen Position der Pedalgarnitur (100, 900) auf dem Boden oder einem Träger positioniert werden kann,
wobei die erste stabile Position derart ist, dass sich das oder jedes Pedal (116, 916) von links der Pedalgarnitur (100, 900) aus gesehen unter den Kräften, die von dem mindestens einen Fuß ausgeübt werden, um das Pedal (116, 916) zu betätigen, gegen den Uhrzeigersinn dreht,
wobei die Pedalgarnitur (100, 900) **dadurch gekennzeichnet ist, dass** der Rahmen (102, 902) mindestens einen zweiten Teil (120, 920) aufweist, wobei der mindestens zweite Teil (120, 920) abnehmbar in Bezug auf den ersten Teil (118, 918) oder in Bezug auf einen anderen der zweiten Teile (120, 920) befestigt ist, oder wobei der mindestens zweite Teil (120, 920) drehbar in Bezug auf den ersten Teil (118, 918) oder in Bezug auf einen anderen der zweiten Teile (120, 920) befestigt ist,
wobei mindestens einer der zweiten Teile (120, 920) eine Positionierfläche (110, 910) aufweist, die in einer zweiten stabilen Position der Pedalgarnitur (100, 900) auf dem gleichen Boden oder dem gleichen Träger positioniert werden kann,
wobei die zweite stabile Position derart ist, dass sich das oder jedes Pedal (116, 916) von links der Pedalgarnitur (100, 900) aus gesehen unter den Kräften, die von dem mindestens einen Fuß ausgeübt werden, um das Pedal (116, 916) zu betätigen, im Uhrzeigersinn dreht,
- wobei der Auflagebereich des oder jedes Pedals (116, 916) in jeder stabilen Position derart angeordnet ist, um im Wesentlichen auf Ebene des Metatarsus des mindestens einen Fußes positioniert zu werden.

2. Pedalgarnitur (100, 900) nach Anspruch 1, **dadurch gekennzeichnet, dass** die Drehung durch ein Scharnier zwischen dem ersten Teil (118, 918) und dem zweiten Teil (120, 920) oder jedem der zweiten Teile (120, 920) durchgeführt wird.

3. Pedalgarnitur (100, 900) nach einem der Ansprüche 1 bis 2, **dadurch gekennzeichnet, dass** es einen einzigen ersten Teil (118, 918) und einen einzigen zweiten Teil (120, 920) gibt, die L-förmig miteinander verbunden sind, und dass die Auflagebereiche der Pedale (116, 916) im Innenwinkel angeordnet sind, der durch die Arme des L gebildet ist.

4. Pedalgarnitur (100, 900) nach einem der Ansprüche 1 bis 3, **dadurch gekennzeichnet, dass** sie mindestens eine Strebe (152, 952) aufweist, die abnehmbar zwischen den zwei Teilen (118, 918, 120, 920) befestigt ist, um sie zueinander in Position zu halten.

5. Pedalgarnitur (100, 900) nach einem der Ansprüche 1 bis 4, **dadurch gekennzeichnet, dass** sie einen Wahlschalter aufweist, der ermöglicht, mindestens eines der Pedale (116, 916) in Abhängigkeit von der Position der Pedalgarnitur (100, 900) neu zuzuweisen.

6. Pedalgarnitur (100, 900) nach Anspruch 5, **dadurch gekennzeichnet, dass** der Wahlschalter ein Schwerkraftsensor sind.

7. Pedalgarnitur (100, 900) nach einem der Ansprüche 1 bis 6, **dadurch gekennzeichnet, dass** sie für das oder jedes Pedal (116, 916) eine Zwischeneinstellungsvorrichtung (306) aufweist, die dazu bestimmt ist, die Winkeleinstellung des Pedals (116, 916) zu ermöglichen, wobei die Zwischeneinstellungsvorrichtung (306) ein Gabelstück (308), das drehbeweglich auf dem Rahmen (102) befestigt ist, eine Einstellachse (310), die drehbeweglich auf dem Gabelstück (308) ist, und Verriegelungsmittel aufweist, die die Position des Pedals (116) in Bezug auf das Gabelstück (308) verriegeln, wobei die Verriegelungsmittel die Form eines einschiebbaren Zapfens (312), der von dem Pedal (116) getragen ist, und von einer Reihe von mindestens zwei Löchern (314) annehmen, die in dem Gabelstück (308) ausgeführt ist und dazu bestimmt ist, den einschiebbaren Zapfen (312) aufzunehmen.

8. Pedalgarnitur (100, 900) nach einem der Ansprüche 1 bis 7, **dadurch gekennzeichnet, dass** das oder jedes Pedal (116, 916) aus einem Hebelarm (104, 904), einem Pedalkopf, der den Auflagebereich trägt, und einer Zwischenausrichtungsvorrichtung (402, 907) gebildet ist, die auf der einen Seite an dem Hebelarm (104, 904) befestigt ist und auf der anderen Seite an dem Pedalkopf befestigt ist und dazu bestimmt ist, den Pedalkopf in Bezug auf den Hebelarm (104, 904) auszurichten.

9. Pedalgarnitur (100, 900) nach einem der Ansprüche 1 bis 8, **dadurch gekennzeichnet, dass** sie für das oder jedes Pedal (116, 916) einen Anschlag (960) aufweist, der abnehmbar an dem Rahmen (102, 902) befestigt ist und einen Anschlagbereich aufweist, auf dem das Pedal (116, 916) zur Anlage kommt, wenn es durch den mindestens einen Fuß betätigt wird oder wenn der Anschlag (960) das Pedal (116, 916) vorspannt.

10. Pedalgarnitur (100, 900) nach Anspruch 9, **dadurch gekennzeichnet, dass** der Anschlag (960) derart in der Position verstellbar ist, um eine Verschiebung des Anschlagbereichs entlang des Pedals (116, 916) zu ermöglichen.

11. Pedalgarnitur (100, 900) nach Anspruch 1, **dadurch gekennzeichnet, dass** der zweite Teil (120, 920) die Form eines Bogens oder eines winkelförmigen Trägers annimmt.

12. Verfahren zum Ändern der Position einer Pedalgarnitur (100, 900) nach einem der Ansprüche 1 bis 11, wobei das Verfahren Folgendes aufweist:
- einen Schritt des Schwenkens der Pedalgarnitur (100, 900) um eine Achse, die im Wesentlichen parallel zu der Drehachse des oder jedes Pedals (116) ist, derart, um von einer stabilen Position in die andere stabile Position bewegt zu werden, und
- einen Schritt des Neuzuweisens der Funktion von dem oder von mindestens einem der Pedale (116).

13. Verfahren zum Ändern der Position nach Anspruch 12, **dadurch gekennzeichnet, dass** es ferner einen Schritt des Schwenkens der Pedalgarnitur (100, 900) um eine Achse aufweist, die im Wesentlichen senkrecht zu der Fläche des Bodens oder des Trägers der Pedalgarnitur (100, 900) ist.

14. Verfahren zum Ändern der Position nach Anspruch 12, **dadurch gekennzeichnet, dass** es ferner einen Schritt des Befestigens des mindestens einen zweiten Teils (120, 920) an dem ersten Teil (118, 918) aufweist.

15. Verfahren zum Ändern der Position nach Anspruch 12, **dadurch gekennzeichnet, dass** es ferner einen Schritt des Auflegens der Positionierfläche (110, 910) auf dem Boden oder dem Träger aufweist.

## Claims

1. Pedal assembly (100, 900) for a video game or vehicle driving simulation, said pedal assembly (100, 900) comprising:
- at least one pedal (116, 916), said or each pedal (116, 916) having a pressing zone for at least one foot, and
- a frame (102, 902) comprising a first part (118, 918) supporting said pedal(s) (116, 916), which are mounted in a rotatable manner with respect to said frame (102, 902),
said first part (117, 918) having a positioning face (108, 908) that is able to be positioned on the ground or a support, in a first stable position of the pedal assembly (100, 900),
the first stable position being such that, as seen from the left-hand side of the pedal assembly (100, 900), said or each pedal (116, 916) pivots anticlockwise under the forces produced by said at least one foot to actuate said pedal (116, 916),
said pedal assembly (100, 900) being **characterized in that** said frame (102, 902) has at least one second part (120, 920), said at least second part (120, 920) being mounted in a removable manner with respect to said first part (118, 918) or with respect to another of said second parts (120, 920), or said at least second part (120, 920) being mounted in a rotatable manner with respect to said first part (118, 918) or with respect to another of said second parts (120, 920),
at least one of said second parts (120, 920) having a positioning face (110, 910) that can be positioned on the same ground or the same support, in a second stable position of the pedal assembly (100, 900),
the second stable position being such that, as seen from the left-hand side of the pedal assembly (100, 900), said or each pedal (116, 916) pivots clockwise under the forces produced by said at least one foot to actuate said pedal (116, 916),
- the pressing zone of the or each pedal (116, 916) being disposed, in each stable position, so as to be positioned substantially in the region of the metatarsal of said at least one foot.

2. Pedal assembly (100, 900) according to Claim 1, **characterized in that** the rotation is realized by a hinge between said first part (118, 918) and said second part (120, 920) or each of said second parts (120, 920).

3. Pedal assembly (100, 900) according to either of Claims 1 and 2, **characterized in that** there is only one first part (118, 918) and one second part (120, 920) that are joined together in an L shape, and **in that** the pressing zones of the pedals (116, 916) are disposed in inner corner formed by the legs of the L.

4. Pedal assembly (100, 900) according to one of Claims 1 to 3, **characterized in that** it has at least one spacer (152, 952) fastened in a removable manner between the two parts (118, 918, 120, 920) in order to keep them in position with respect to one another.

5. Pedal assembly (100, 900) according to one of Claims 1 to 4, **characterized in that** it has a selector for reassigning at least one of the pedals (116, 916) depending on the position of the pedal assembly (100, 900) .

6. Pedal assembly (100, 900) according to Claim 5, **characterized in that** the selector is a gravity detector.

7. Pedal assembly (100, 900) according to one of Claims 1 to 6, **characterized in that** it has, for said or each pedal (116, 916), an intermediate adjusting device (306) intended to allow the angular adjustment of said pedal (116, 916), said intermediate adjusting device (306) having a clevis (308) mounted in a rotatable manner on the chassis (102), a rotatable adjustment pin (310) on said clevis (308) and locking means which lock the position of the pedal (116) with respect to the clevis (308), said locking means being in the form of a retractable stud (312) carried by the pedal (116), and a set of at least two holes (314) made in the clevis (308) and intended to receive said retractable stud (312).

8. Pedal assembly (100, 900) according to one of Claims 1 to 7, **characterized in that** said or each pedal (116, 916) consists of a lever arm (104, 904), of a pedal head bearing said supporting zone, and an intermediate orientation device (402, 907) fastened, on one side, to said lever arm (104, 904) and, on the other side, fastened to said pedal head, and intended to orient said pedal head with respect to said lever arm (104, 904) .

9. Pedal assembly (100, 900) according to one of Claims 1 to 8, **characterized in that** it has, for the or each pedal (116, 916), a stop (960) that is fastened in a removable manner to said chassis (102, 902) and comprises a stop zone against which said pedal (116, 916) comes into abutment when it is actuated by said at least one foot or when said stop (960) pretensions said pedal (116, 916) .

10. Pedal assembly (100, 900) according to Claim 9, **characterized in that** said stop (960) is adjustable in position so as to allow said abutment zone to move along said pedal (116, 916).

11. Pedal assembly (100, 900) according to Claim 1, **characterized in that** the second part (120, 920) is in the form of an arch or a support in the form of a bracket.

12. Method for changing the position of a pedal assembly (100, 900) according to one of Claims 1 to 11, said method comprising:
- a step of pivoting said pedal assembly (100, 900) about an axis substantially parallel to the axis of rotation of the or each pedal (116) so as to pass from one stable position to the other stable position, and
- a step of reassigning the function of the or at least one of the pedals (116).

13. Position changing method according to Claim 12, **characterized in that** it also comprises a step of pivoting the pedal assembly (100, 900) about an axis substantially orthogonal to the surface of the ground or of the support of the pedal assembly (100, 900).

14. Position changing method according to Claim 12, **characterized in that** it also comprises a step of fastening said at least one second part (120, 920) to said first part (118, 918).

15. Position changing method according to Claim 12, **characterized in that** it also comprises a step of placing said positioning face (110, 910) on the ground or the support.
